# EUROPEAN PATENT APPLICATION

(11) **EP 1 860 802 A1**
(43) Date of publication of application: **28.11.2007**
(21) Application number: 06290865.2
(22) Date of filing: 24.05.2006
(51) Int. Cl.: H04B 10/158, H04B 10/18

(54) **Method of recovering data from an optical signal in APOL modulation format, receiver and optical transmission system**

(71) Applicant: Alcatel Lucent, 75008 Paris (FR)
(72) Inventor: Bülow, Henning, Dr., 70806 Kornwestheim (DE); Charlet, Gabriel, 91190 Villier-le-Bacle (FR); Buchali, Fred, Dr., 71336 Waiblingen (DE); Franz, Bernd, 74336 Brackenheim (DE)
(74) Representative: Kohler Schmid Möbus

(57) **Abstract**

A method of recovering data from an optical signal (OS) in an alternating polarization (APOL) modulation format suffering from signal distortion, e.g. Polarization Mode Dispersion (PMD), Polarization Dependent Loss (PDL) or the like, the optical signal forming a bit stream of odd and even bits (OB, EB) having a given bit rate. The method comprises splitting (6) the optical signal and/or an electrical signal (ESC, ESD) derived from the optical signal into at least two split signals (SS1, SS2). In order to mitigate distortion effects of the optical signal, the proposed method further comprises independently and adaptively controlling (10, 12) respective distortion compensating means (9, 11) provided for the at least two split signals for recovering the odd bits and the even bits, respectively.

## Description

### Background of the invention

The present invention relates to a method according to the preamble of claim 1 of recovering data from an optical signal in an alternating polarization (APOL) modulation format suffering from distortion, e.g. Polarization Mode Dispersion (PMD) or Polarization Dependent Loss (PDL), the optical signal forming a bit stream of odd and even bits having a given bit rate, comprising splitting the optical signal and/or an electrical signal derived from the optical signal into at least two split signals.

The present invention also relates to a receiver according to the preamble of claim 18 for use in an optical transmission system with an alternating polarization (APOL) modulated data bit stream of odd and even bits having a given bit rate, comprising means for splitting a transmission path for the optical signal and/or an electrical signal derived from the optical signal into at least two transmission path branches or signal path branches parallel to each other.

Furthermore, the present invention relates to a transmission system according to the preamble of claim 35 for transmitting optical signal having an alternating polarization (APOL) modulation format.

In order to overcome limitations posed by fibre non-linearity on links in submarine and ultra-long haul terrestrial optical transmission systems, an alternating polarization (APOL) modulation format, such as APOL-DPSK (Differential Phase Shift Keying) or APOL-RZ-DPSK (return-to-zero Differential Phase Shift Keying), is generally employed. In an APOL modulation format, odd and even data bits in an optical signal are transmitted with mutually orthogonal polarizations. However, this leads to an introduction of Polarization Mode Dispersion (PMD) or other polarization dependent impairments induced during transmission on the fiber or during signal generation, optical wavelength multiplexing/demultiplexing or signal detection, which is generally different for the odd bit component and for the even bit component of a transmitted APOL modulated optical signal, respectively. Though in the following description as signal distortion PMD is referred to, in general also the other possible types of distortion, e.g. Polarization Dependent Loss (PDL), can be mitigated, too. In particular for a desired upgrade of existing 10 Gbit/s transmission systems to 40 Gbit/s transmission systems, efficient compensation of PMD, PDL or the like is a predominant issue.

Conventional distortion compensating means include optical PMD compensators, adaptive electronic equalizers as well as distributed fast polarization scrambling in combination with Forward Error Correction (FEC). However, they are not suitable for use in optical transmission systems employing an APOL modulation format due to the above-described differential behaviour of odd bit and even bit contributions, respectively.

### Object of the invention

It is the object of the present invention to provide a method of recovering data from an optical signal in an alternating polarization (APOL) modulation format, a receiver for use in an optical transmission system using APOL modulation as well as a transmission system for transmitting optical signals having an APOL modulated format, which efficiently mitigate effects of PMD and/or other distortion impairments on the optical signals while having a relatively simple configuration at low costs.

### Summary of the invention

According to a first aspect of the present invention the object is achieved by the method according to appended patent claim 1.

According to said first aspect of the present invention a method of recovering data from an optical signal in an alternating polarization (APOL) modulation format suffering from Polarization Mode Dispersion (PMD), the optical signal forming a bit stream of odd and even bits having a given bit rate, comprising splitting the optical signal and/or an electrical signal derived from the optical signal into at least two split signals, is characterized in that respective distortion compensating means provided for the at least two split signals are controlled independently and adaptively for recovering the odd bits and the even bits, respectively.

According to a second aspect of the present invention the object is also achieved by providing a receiver according to appended patent claim 18.

According to said second aspect of the present invention, a receiver for use in an optical transmission system with an alternating polarization (APOL) modulated data bit stream of odd and even bits having a given bit rate, comprising means for splitting a transmission path for the optical signal and/or an electrical signal derived from the optical signal into at least two transmission path branches parallel to each other, is characterized in that the first transmission path branch comprises at least one distortion compensating means and the second transmission path branch comprises at least one second distortion compensating means in operative connection with at least one respective adaptation means for independently and adaptively controlling the at least one first and second distortion compensating means for recovering the odd bits and the even bits, respectively.

According to a third aspect of the present invention, the object is further achieved by providing a transmission system according to appended patent claim 35.

According to said third aspect of the present invention, a transmission system for transmitting optical signals having an alternating polarization (APOL) modulation format, comprising an optical transmission line for transmitting the optical signals, the optical transmission line introducing PMD distortion effects on the optical signals, and at least one receiver connected to the optical transmission line, the receiver comprising means for splitting a transmission path for the optical signal and/or an electrical signal derived from the optical signal into at least two transmission path branches parallel to each other, is characterized in that the first transmission path branch comprises at least one distortion compensating means and the second transmission path branch comprises at least one second distortion compensating means in operative connection with at least one respective adaptation means for independently and adaptively controlling the at least one first and second distortion compensating means for recovering the odd bits and the even bits, respectively.

Preferred embodiments of the various aspects of the present invention are subjects of respective subordinate claims, the wording of which is herewith incorporated by reference in the present description to avoid unnecessary text repetition.

Thus, in accordance with a basic concept underlying the present invention, at least two parallel operating optical compensators or electronic equalizers are used on the receiver side of an optical transmission system employing an APOL modulation format, one of said compensators/equalizers being optimized for processing the odd bits of the optical signal and the other one being optimized for processing the even bits of the optical signal, respectively. The aforementioned compensators/equalizers are independently and adaptively controlled in accordance with a quality of the respective bits by providing corresponding feedback signals to respective associated adaptation means. Then, a recovered signal can be generated by combining the even bit output from the dedicated compensator/equalizer and the odd bit output from the dedicated compensator/equalizer, e. g. by means of a multiplexer.

In this way, a basic idea underlying the present invention relates to a differentiation between odd and even bits (symbols). An input optical signal is split into at least two split signals on separate transmission branches and supplied to separate optical and/or electronic compensators, such as Feed Forward Equalizer (FFE) and/or Decision Feedback Equalizer (DFE) circuits. As stated before, each branch is optimized for the appropriate odd bit/even bit distortion.

In one particular embodiment of the invention, two feedback signals can be employed the this end, wherein one feedback signal contains information on the quality of the even bits and the other feedback signal contains information on the quality of the odd bits, which are then provided for adapting the even bit compensator and odd bit compensator, respectively.

The input optical signal can have any kind of APOL modulation format, e.g. - but not limited to - APOL-RZ-DPSK.

Further advantages and characteristics of the present invention can be gathered from the following description of preferred embodiments with reference to the enclosed drawings and from the appended patent claims, which are incorporated by reference herein in order to avoid unnecessary repetition. The features mentioned above as well as below can be used in accordance with the invention either individually or in conjunction. The embodiments mentioned are not to be understood as an exhaustive enumeration but rather as examples with regard to the underlying concept of the present invention.

### Drawings

Fig. 1 is a schematic block diagram of a transmission system for transmitting optical signals in accordance with an embodiment of the present invention;
Fig. 2a is a schematic diagram of an optical signal transmitted in the optical transmission system of Fig. 1;
Fig. 2b is a schematic diagram showing an impact of Polarization Mode Dispersion (PMD) on the optical signal of Fig. 2a;
Fig. 3a is a schematic diagram showing relative orientations of odd and even bits in the signal of Fig. 2a with respect to axes of an optical fibre used in the transmission system of Fig. 1;
Fig. 3b is a schematic diagram of an optical signal transmitted in the optical transmission system of Fig. 1;
Fig. 3c is a schematic diagram showing an impact of Polarization Mode Dispersion (PMD) on the signal of Fig. 3b for the configuration depicted in Fig. 3a;
Fig. 4 is a schematic block diagram of a first embodiment of a receiver in accordance with the present invention;
Fig. 5 is a schematic block diagram of a second embodiment of a receiver in accordance with the present invention comprising optical PMD compensating means;
Fig. 6 is a schematic block diagram of a third embodiment of a receiver in accordance with the present invention comprising electronic distortion equalizers;
Fig. 7 is a schematic block diagram of a fourth embodiment of a receiver in accordance with the present invention comprising a plurality of individual feedback signal generators;
Fig. 8 is a schematic block diagram of a fifth embodiment of a receiver in accordance with the present invention comprising concatenated Feed Forward Equalizers and Decision Feedback Equalizers and DFE crossover feedback;
Fig. 9 is a schematic block diagram of a sixth embodiment of a receiver in accordance with the present invention comprising concatenated Feed Forward Equalizers and Decision Feedback Equalizers and DFE crossover feedback with optimized clock adjustment;
Fig. 10 is a schematic block diagram of a seventh embodiment of a receiver in accordance with the present invention comprising concatenated Feed Forward Equalizers and Decision Feedback Equalizers using independent feedback signals;
Fig. 11 is a schematic block diagram of an eighth embodiment of a receiver in accordance with the present invention with Forward Error Correction error count adaptation;
Fig. 12 is a schematic block diagram for illustrating demultiplexing of a feedback signal used in a receiver in accordance with the present invention;
Fig. 13a is a schematic diagram for illustrating bit encoding in a APOL-RZ-DPSK modulated optical signal effected by Polarization Mode Dispersion;
Fig. 13b is a schematic diagram for illustrating converting the optical signal of Fig. 13a to an electrical signal having the same distortion;
Fig. 14 is a further embodiment of a receiver in accordance with the present invention, in particular for processing the electrical signal of Fig. 13b; and
Fig. 15 is a further embodiment of a receiver in accordance with the present invention, in particular for processing the electrical signal of Fig. 13b.

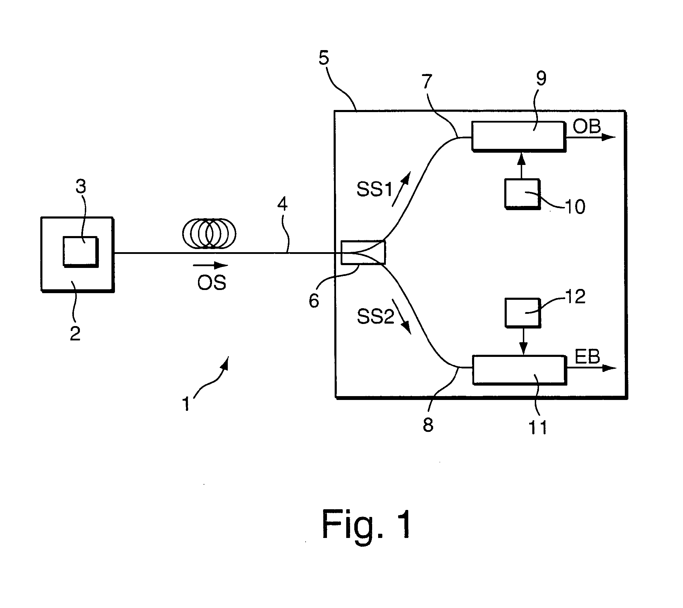

**Fig. 1** is a schematic block diagram of a transmission system **1** for transmitting optical signals **OS** having an alternating polarization (APOL) modulated format, e.g. - but not limited to - APOL-RZ-DPSK. The transmission system 1 of Fig. 1 comprises at least one transmitter **2** including a modulator **3** for transmitting the optical signals OS in the APOL modulated format on an optical fibre transmission line **4** connecting the transmitter 2 with at least one receiver **5**. In this way, transmission line 4 constitutes a transmission path for the optical signals OS.

The receiver 5 comprises a splitting means **6** for splitting the transmission path into parallel branches **7, 8,** respectively. The first branch 7 is for propagating a first split signal **SS1**, and the second branch 8 is for propagating a second split signal **SS2**. In the first branch 7 there is located a Polarization Mode Dispersion (PMD) compensating means **9**, which is operatively connected with an associated adaptation means **10**. In the second branch 8 there is located a second PMD compensating means **11**, which is operatively connected with an associated adaptation means **12**. The PMD compensating means 9, 11 output signals **OB** and **EB**, respectively.

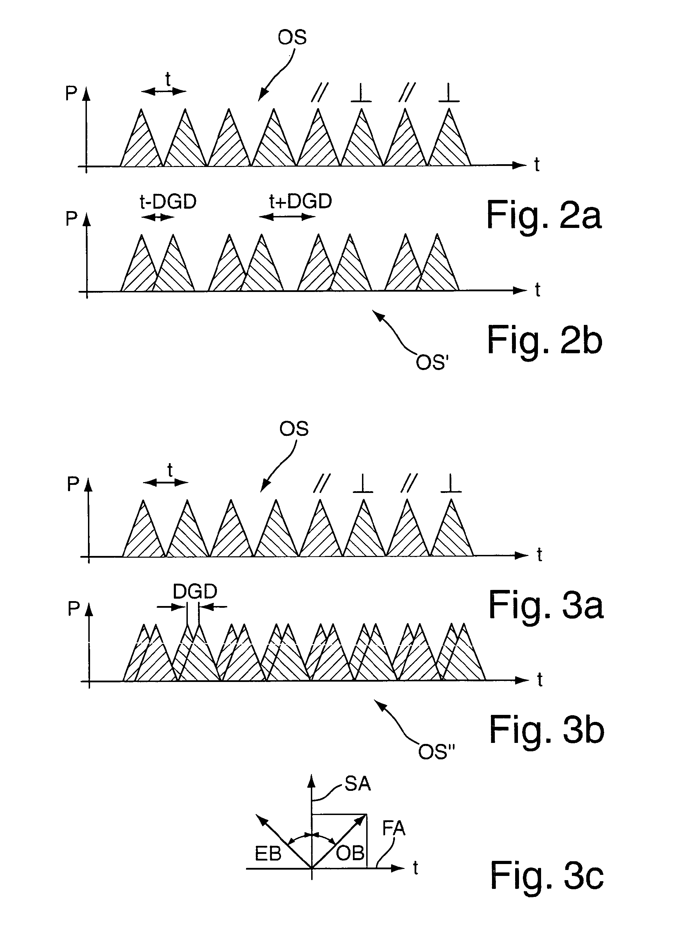

The functioning of the transmission system 1 of Fig. 1 will now be explained with further reference to appended Figs. 2a-3c.

As known to a person skilled in the art, an APOL modulated data bit stream comprises odd and even bits with mutually orthogonal directions of polarization, i. e. part of the optical signal OS used for transmitting the odd bits has a first polarization, and part of the optical signal used for transmitting even bits has a second polarization orthogonal to said first polarization. This is schematically depicted in **Fig. 2a,** which shows optical signal power **P** versus time t. In Fig. 2a, odd bits have a first polarization marked as *"II",* whereas even bits have a second polarization marked as "⊥". A time delay between consecutive bits, i. e. an odd bit and an even bit, is denoted Δt.

Propagation of the optical signal OS of Fig. 2a on transmission line 4 (Fig. 1) introduces signal distortion due to PMD causing, for instance, Differential Group Delay (DGD) as depicted in Fig. 2b.

**Fig. 2b** is a schematic diagram for illustrating an impact of DGD on an APOL modulated optical signal (Fig. 2a). As can be gathered from Fig. 2b, the time delay between consecutive bits in the optical signal **OS'** has been changed by DGD, such that the bits are now grouped by two. In this way, time delay between a given odd bit and a subsequent even bit has been reduced to Δt-DGD, whereas time delay between and even bit and a subsequent odd bit has been increased to Δt+DGD.

The worst case for PMD, as schematically depicted in Fig. 2b, is obtained when odd bits are aligned along one principle axis of the transmission fibre 4 (Fig. 1; e. g. the slow axis **SA**), and even bits are aligned along the other axis of the optical fibre (e. g., fast axis **FA**).

**Fig. 3a** schematically illustrates the case in which respective polarizations of odd and even bits OB, EB are oriented at an angle α = 45° with respect to the principle axis (slow axis SA) of the optical fibre **4** (Fig. 1). In this case, the distortions introduced by PMD on the odd and even bits of an APOL modulated optical signal OS, as schematically depicted in **Fig. 3b** (reproducing Fig. 2a for convenience) are approximately the same, as shown in **Fig. 3c**: each of the pulses (odd an even bits in Fig. 3b) of optical signal **OS**" is broadened due to PMD, such that Inter-Signal Interference (ISI) is increased.

In practice, an APOL modulated optical signal propagating on an optical fibre transmission line will be subject to both the PMD related distortions of Fig. 2b and Fig. 3c.

In order to mitigate the above-described effects of PMD on an APOL modulated optical signal, the present invention proposes using independently and adaptively controlled PMD compensating means 9, 11 (Fig. 1), which are located in separate branches of the signal transmission path. The transmission path is split owing to the presence of splitting means 6, such that the PMD compensating means 9, 11 receive respective first and second split signals SS1, SS2 derived from the optical signal OS. Furthermore, in accordance with the present invention, for recovering data from the optical signal OS the PMD compensating means 9, 11, in operative connection with their respective adaptation means 10, 12, are devised for recovering the odd bits OB and the even bits EB of the optical signal OS, respectively.

In this way, the inventive approach enables compensating PMD induced degradation of an APOL modulated optical signal, which generally will not be the same for odd and even bits (cf. Fig. 2b and 3c). This is in contrast with standard electrical equalizers which cannot cope with the above-mentioned degradation effects.

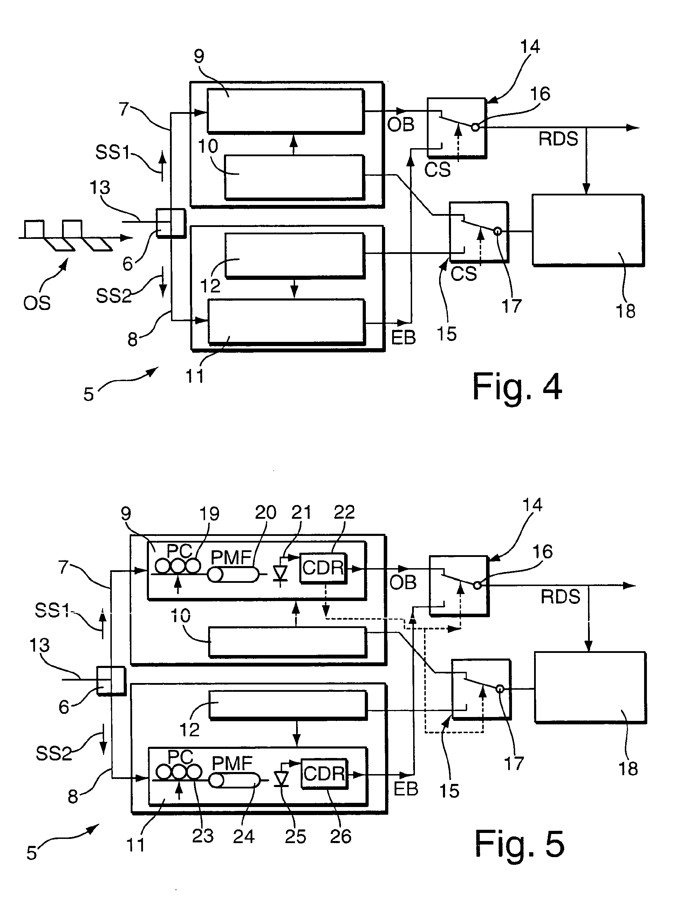

The embodiment of Fig. 1 being a basic conceptual approach to illustrate the inventive idea of PMD compensation, the latter will now be presented in further detail by means of the appended Figs. 4 to 15 wherein the same reference numerals as in Figs. designate the same or similar elements.

**Fig. 4** is a schematic block diagram of a first embodiment of a receiver in accordance with the present invention, in particular for use in the transmission system 1 of Fig. 1. Referring to Fig. 4, the receiver 5 comprises an input 13 for inputting an APOL modulated optical signal OS. Downstream of input 13 is located the splitting means 6 for splitting the signal transmission path into branches 7, 8. In the first branch 7 there is located PMD compensating means 9, which is adapted to recover/decide odd bits OB of optical signal OS. PMD compensating means 9 is connected to adaptation means (adaptation control means) 10 for recovering/deciding odd bits OB of optical signal OS. In the second branch 8 there is located a second PMD compensating means 11, which is adapted for recovering/deciding even bits OB of optical signal OS. PMD compensating means 10 is connected to adaptation means (adaptation control means) 12 for recovering/deciding even bits OB of optical signal OS.

Downstream of PMD compensating means 9, 11, the receiver 5 comprises a first selecting means **14**, whereas adaptation means 10, 12 are mutually connected to a second selecting means **15**. An output **16** of the first selecting means 14 and an input **17** of the second selecting means 15, respectively, are coupled with a feedback unit **18**, i. e. a feedback signal generator, an output signal of which is used by the adaptation means 10, 12 for independently and adaptively controlling operation of the respective PMD compensating means 9, 10.

The OB and EB adaptation units optimise the OB und EB mitigators (compensators) by optimizing a feedback signal which dominantly contains OB quality information and EB quality information, respectively.

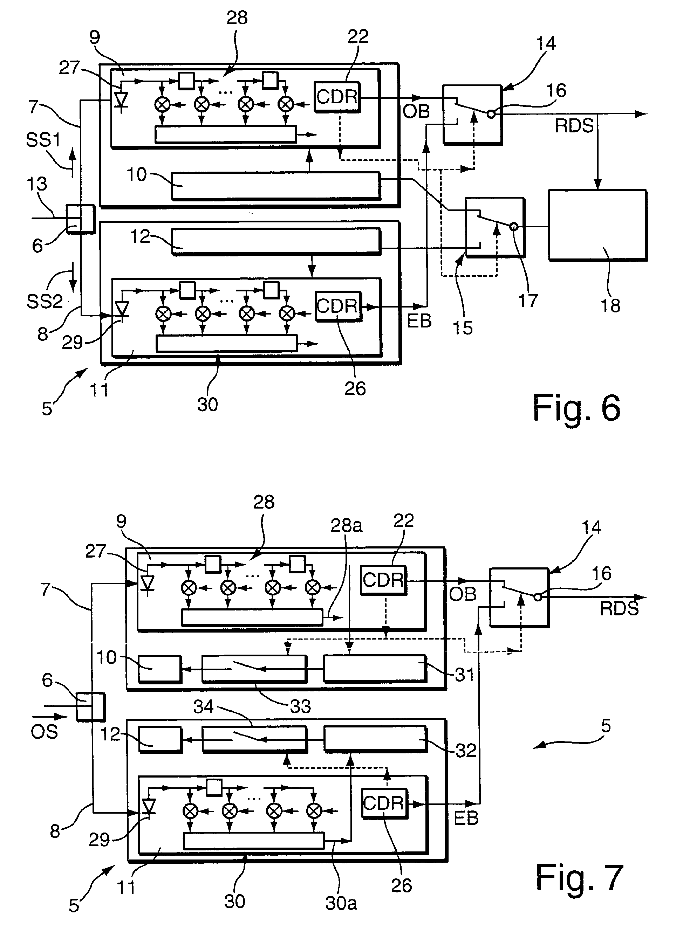

Distribution of the respective OB and EB feedback information (signal quality) can be achieved by the selecting means 17. Obviously, other solutions are possible to feed the OB and the EB feedback signal to the respective OB and EB equalizer/compensator adaptation control (see Fig. 7). It has only to be ensured that the two feedback signals contain quality information of either the OB or the EB signal.

The first and second selecting means 14, 15, which function as an odd/even bit muitipiexer and an odd/even feedback demultiplexer, respectively, are controlled by a subrate clock signal CS (dotted arrow in Fig. 4) from a clock recovery unit (not shown in Fig. 4). In this context, the term "subrate" signifies that a rate (frequency) of said clock signal CS is lower than a bit rate of the APOL modulated optical signal OS. In the embodiment of Fig. 4, the rate of the subrate clock signal would be half the bit rate of optical signal OS.

Under the action of the second selecting means 15, the odd/even bit PMD compensating means 9, 11 are adapted to the quality of the respective bits of optical signal OS by providing a corresponding feedback signal for the odd and for the even bits to the respective adaptation means 10, 12. Under the action of the first selecting means 14, a recovered data signal **RDS** is generated at the output 16 by combining the even bits decided by the even bit at PMD compensating means 9 and the odd bit decided by the odd bit at PMD compensating means 11.

In accordance with the present invention, the feedback unit 18 can be devised in a variety of ways, e. g. as an eye monitor or a Forward Error Correction (FEC) unit, as known to a person skilled in the art.

Furthermore, although only a number of two PMD compensating means 9, 11 alongside with respective adaptation means 10, 12 are present in the embodiment of Fig. 4 together with a corresponding configuration of the first and second selecting means 14, 15, it is obvious to a person skilled in the art that a greater number of PMD compensating means together with associated adaptation means could be used. This would entail a suitable reconfiguration of a first and second selecting means 14, 15 involving control by a new subrate clock signal, the rate of which should be lowered according to the increased number of PMD compensating means.

**Fig. 5** is a block diagram of a further embodiment of the receiver in accordance with the present invention. The embodiment of Fig. 5 follows the basic outline discussed in detail above with reference to Fig. 4, such that the same reference numerals as in Fig. 4 are used to designate the same or similar elements.

According to the embodiment of Fig. 5, the receiver 5 in accordance with the present invention comprises PMD compensating means 9, 11, which are formed by standard optical PMD compensators. PMD compensating means 9 comprises an adjustable Polarization Controller (PC) 19 connected in series with a Polarization Maintaining Fibre (PMF) 20. Downstream the PMF 20, PMD compensating means 9 further comprises an optical-to-electrical converter **21**, e. g. a photodiode 21 operatively connected with a clock recovery unit **22**. The clock recovery unit 22 is further connected with the first and second selecting means 14, 15, for providing the subrate clock signal thereto.

Similar to PMD compensating means 9, PMD compensating means 11 comprises a PC **23**, a PMF **24**, an optical-to-electrical converter **25**, and a clock recovery unit **26**. A cascade of more than one PC and one PMF as well as other solutions of PMD compensators acting on the optical signal are also possible.

Furthermore, in the embodiment of Fig. 5 the feedback unit 18 is devised as a FEC unit, i. e. a FEC error counting unit.

During operation, according to the embodiment of Fig. 5 PMD induced distortion effects are compensated independently for odd and even bits by means of the above-described optical PMD compensators. The split signals SS1, SS2 are then converted to electrical signals by means of the photodiodes 21, 25, respectively. At least one clock signal recovered from said electrical signals by means of clock recovery units 20, 26 is then used to control a first and second selecting means 14, 15 for generating the recovered data signal RDS at the output 16 of the first selecting means 14 and for providing feedback generated by the FEC unit 18 to the adaptation means 11, 12, respectively. The selecting means distributes the FEC error count for OB or EB to OB and EB adaptation control, respectively.

**Fig. 6** is a schematic block diagram of another embodiment of the receiver in accordance with the present invention, which is derived from the basic embodiment of Fig. 4 and/or the above-described embodiment of Fig. 5, such that the same or similar elements are designated the same reference numerals.

According to the embodiment of Fig. 6 and in contrast to the embodiment of Fig. 5, the receiver 5 comprises linear Electronic Distortion Equalizers (EDE) instead of optical PMD compensators (cf. Fig. 5). In detail, PMD compensating means 9 comprises an optical-to-electrical converter (photodiode) **27** located upstream of a Feed Forward Equalizer **28**, also referred to as linear equalizer LE. Downstream of FFE 28 there is located a clock recovery unit 22, as described above with reference to Fig. 5.

PMD compensating means 10, too, also comprises an optical-to-electrical converter (photodiode) **29** located upstream of a linear Electronic Distortion Equalizer devised as an FFE (LE) **30**. Downstream of FFE 30 there is located a clock recovery unit 26, as described above with reference to Fig. 5.

Feed Forward Equalizers such as 28, 30 are known to a person skilled in the art. Therefore, a detailed description thereof can at present be omitted. Adaptation means 10, 12, provided in connection with PMD compensating means 9, 11, respectively, are adapted to control operation of FFE 28 and FFE 30, respectively, in connection with the desired recovery of odd bits OB (PMD compensating means 9) and even bits EB (PMD compensating means 10). As known to a person skilled in the art, this can be achieved by suitably controlling coefficients Cᵢ (not shown) used in the FFE 28, 30 for weighting respective delayed signal contributions.

In the embodiment of Fig. 6, too, feedback unit 18 is devised as an FEC unit (error counting unit).

**Fig. 7** is a schematic block diagram of another embodiment of the receiver in accordance with the present invention derived from the basic embodiment of Fig. 4 and/or the above-described embodiment of Fig. 6, such that the same or similar elements are designated the same reference numerals.

In contrast to the embodiment of Fig. 6, the receiver 5 of Fig. 7 comprises two individual feedback units (feedback signal generators) **31, 32,** respectively, i. e. one individual feedback unit for each PMD compensating means 9, 11, the latter again being essentially devised as FFEs 28, 30. According to the embodiment of Fig. 7, the first feedback unit 31 is devised as an eye monitor connected to an output **28a** of FFE 28 and in parallel to branch 7, i. e. the signal transmission path. Downstream of eye monitor 31, the receiver 5 comprises a first switching means **33** operatively connected to and controlled by clock recovery unit 22 for providing a feedback signal generated by the eye monitor 31 to the adaptation means 10 connected with PMD compensating means 9. The function of said first switching means 33 is to gate only OB signal quality information (eye monitor output signal) to the OB adaptation control for the OB equaliser.

Likewise, a second eye monitor 32 followed by a second switching means **34** connected to and controlled by clock recovery unit 26 is provided parallel to branch 8 for selectively providing a feedback signal generated by the eye monitor 32 to the adaptation means 12 connected with PMD compensating means 11. The function of said second switching means 34 is to gate only EB signal quality information (eye monitor output signal) to the EB adaptation control for the EB equalizer.

In this way, combined action of the first and second switching means 33, 34 is equivalent to the functionality of the second selecting means 15 of Figs. 5, 6.

As stated above, PMD effects present in optical signals are generally different for odd and even bits of an APOL modulated signal. First order PMD may lead to a shift between odd and even bits in the time domain (cf. Fig. 2b) and to a broadening of pulses (cf. Fig. 3c) which in combination leads to a different distortion effect on odd and even bits. In this way, odd and even bits do not interfere uniformly. One edge of the pulses may be heavily distorted by ISI, whereas the other edge is less distorted or even unaffected. In this way, for instance, mitigating ISI from a first bit to a second bit in a bit stream may have to be considered whereas ISI between the second and the third bit in the same bit stream is negligible.

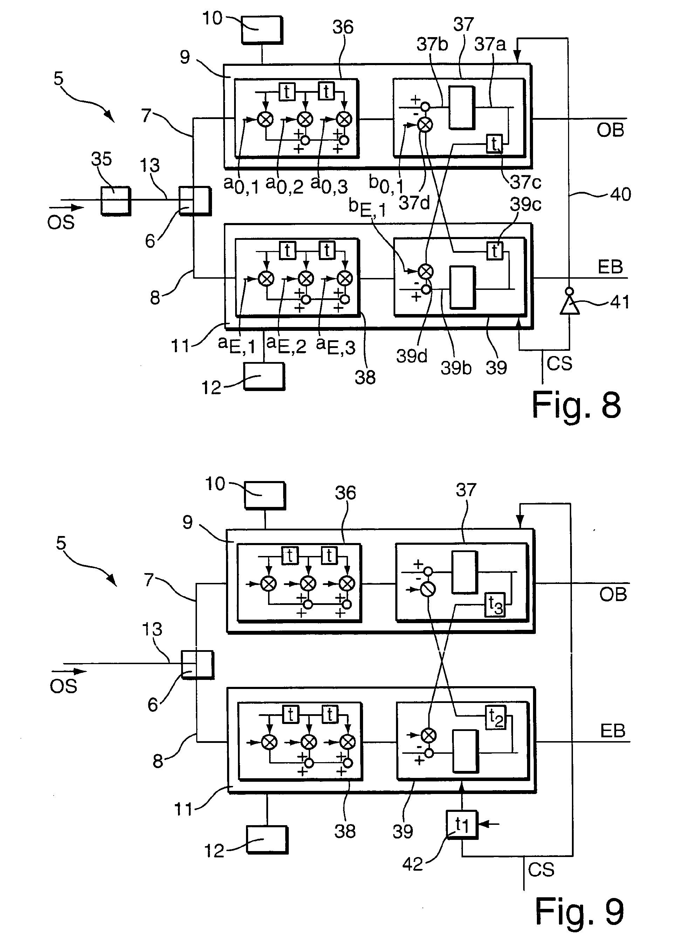

**Fig. 8** shows a schematic block diagram of a further embodiment of the receiver in accordance with the present invention, providing an optimized setup for PMD compensation for the above-described ISI-affected signals. As in the previously described embodiments in accordance with the invention, the receiver 5 comprises an input 13 for inputting an APOL modulated optical signal OS. In the receiver 5 of Fig. 8 there is an optical-to-electrical converter **35** connected with the input 13. The output of the optical-to-electrical converter 35 is provided to splitting means 6 for splitting signal transmission path into parallel branches 7, 8, respectively. The first branch 7 comprises PMD compensating means 9 consisting of a Feed Forward Equalizer (FFE) **36** connected in series with a Decision Feedback Equalizer (DFE) **37**, the latter being located downstream of FFE 36. Likewise, the PMD compensating means 11 on branch 8 comprises a FFE **38** and a DFE **39** connected in series. The DFEs 37, 39 are connected with a common clock source (not shown), e. g. a clock recovery unit, for providing a clock signal to the DFE 37 and the DFE 39, respectively. In a connection **40** from said clock source to one of the DFEs, e. g. DFE 37, there is provided an inverter **41**. The clock source (not shown) provides a clock signal CS, a frequency of which is equal to half the bit rate frequency of optical signal OS.

In this way, the DFEs 37, 39 are clocked with half the data rate frequency, one DFE 39 with a non-inverted and the other DFE 37 with an inverted clock signal CS to guarantee a relative delay of one bit period.

Furthermore, an output **37a** of DFE 37 is cross-connected with an input **39b** of DFE 39 via a first delay element **37c** and a first weighting means **39d**. Likewise, output **39a** of DFE 39 is cross-connected with inputs **37b** of DFE 37 via a second delay element **39c** and a second weighting means **37d**. The weighting means 37d, 39d are controlled by DFE coefficients b_{0,1} and b_{E},₁, respectively, provided by the respective adaptation means 10, 12. FFEs 36, 38 are controlled by filter coefficients **a**_{o,i} and **a**_{E,i}, respectively, provided by adaptation means 10, 12, too. In the embodiment shown, both FFE 36 and FFE 38 are controlled by three filter coefficients; however, any other suitable number of filter coefficients can be used, as known-to a person skilled in the art.

The filter coefficients of the FFEs 36, 38 and of the DFEs 37, 39, respectively, are optimized for mitigation of PMD effects, e. g. ISI, of odd and even bits, respectively. Said coefficients reflect the mitigation of precursor bits on one branch and of postcursor bits on the other branch.

The time delays introduced by delay elements 37c, 39c in Fig. 8 are equal and may generally be chosen to be equal to one bit period.

**Fig. 9** shows a schematic block diagram of yet another embodiment of the receiver in accordance with the present invention, which is generally similar to the above-described embodiment of Fig. 8, such that the same reference numerals are used to designate the same or similar elements. In contrast to the embodiment of Fig. 8, the receiver 5 of Fig. 9 comprises a phase shifter **42** instead of inverter 41. Additionally or alternatively, the respective delays introduced by delay elements 37c, 39c may differ from one bit period.

In this way, the time delay between odd and even pulses, which may generally be different from one bit period, can be equalized by controlling phase shifter 42, e. g. by means of adaptation means 12. Likewise, the delays of delay elements 37c, 39c are optimized to guarantee in-time feedback.

As an alternative to the embodiment depicted in above-described Fig. 9, the phase shifter 42 can be located in a data branch, i. e. branch 7, 8, instead of the clock branch, as shown. Alternatively, FFE 36 and/or 38 can be adapted to function as a phase shifter.

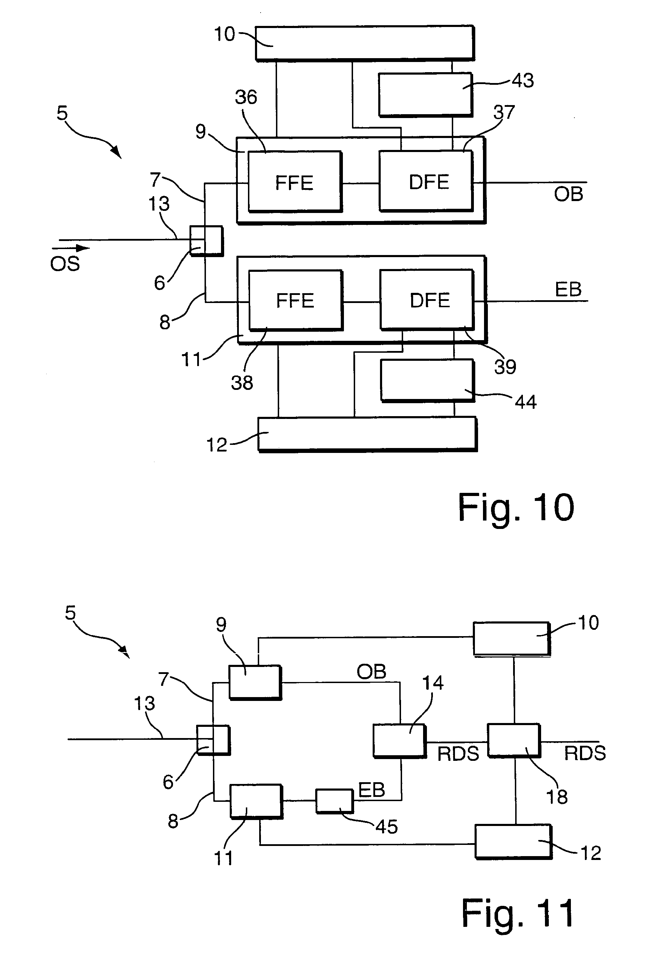

**Fig. 10** is a schematic block diagram of a further embodiment of the receiver in accordance with the present invention. The embodiment of Fig. 10 is generally similar to the above-described embodiments of Figs. 8 and 9, such that the same reference numerals are used to designate the same or similar elements. However, according to Fig. 10 there is no cross-connection between DFE 37 and DFE 39. Instead, two separate feedback units **43, 44** taking the form of eye monitors are provided between DFE 37 and adaptation means 10 and between DFE 39 and adaptation means 12, respectively.

**Fig. 11** shows a schematic block diagram of another embodiment of the receiver in accordance with the present invention, which generally corresponds to the embodiment of Fig. 6, such that the same reference numerals are used to designate the same or similar elements. Additionally, in the embodiment of Fig. 11 the receiver 5 in accordance with the present invention further comprises a delay element **45** in branch 8, between PMD compensating means 11 and selecting means 14.

Additional delay element 45 is provided, because the time delays of PMD compensating means 9 and PMD compensating means 11 generally are not equal. Delay element 45 is provided in order to equalize the run time through both branches 7, 8, respectively.

If generating feedback signals for PMD compensating means 9, 11 and adaptation means 10, 12, respectively after multiplexing (cf. selecting means 14), for instance by using the FEC error count in feedback unit 18, separate registers for errors of odd and even bits are necessary. They can be provided in feedback unit 18 or in adaptation means 11, 12, respectively (not shown in Fig. 11).

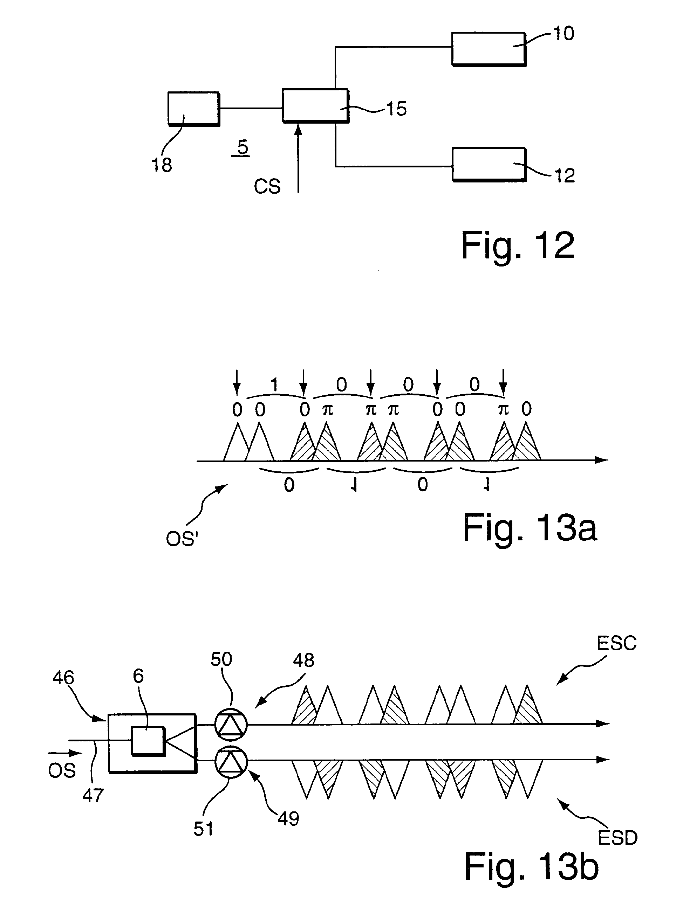

**Fig. 12** is a schematic diagram of another embodiment of a feedback path in the receiver in accordance with the present invention, generally corresponding to the embodiments of Figs. 5 and 6, as described above. According to the embodiment of Fig. 12, feedback unit 18 is coupled with adaptation means 10 and adaptation means 12 via demultiplexer 15, the latter being controlled by subrate clock signal CS (cf. above).

Since in some applications the feedback signal provided by feedback 18 is a continuous signal, division of feedback into the two contributions from odd bits and even bits, respectively, is necessary. Said division can be achieved by demultiplexing feedback signal by means of demultiplexer 15, which corresponds to the second selecting means in above-described Figs. 5 and 6. The demultiplexer 15 can be driven by a separate clock signal CS, as already stated above.

Alternatively, the two feedback signals (feedback odd and feedback even) can be generated independently by using demultiplexed data signals (cf. Fig. 7).

The basic concept underlying the present invention can advantageously be used for mitigating DMP effects in APOL-RZ-DPSK (return-to-zero Differential Phase Shift Keying) optimal signals distorted by DGD. In the following, additional embodiments of the present invention will be described, which are particularly suited for mitigating PMD effects in connection with APOL-RZ-DPSK signals.

**Fig. 13a** is a schematic diagram of an APOL-RZ-DPSK signal distorted by DGD, wherein individual pulses generally correspond to pulses in Fig. 2b, as described above. In an RZ-DPSK signal, consecutive pulses, i. e. consecutive odd bit pulses or consecutive even bit pulses, respectively, encode a logical "1" in case there is no change in phase between said consecutive pulses. In contrast to this, two consecutive pulses encode a logical "0", if there is a change in phase between said consecutive pulses. In Fig. 13a the odd bit pulses (marked by an arrow) encode the logical sequence "1000" with a respective phase shift equal to π between the second and the third, the third and the fourth, and the fourth and the fifth odd bit pulse, respectively. Likewise, the even bit pulses encode a logical sequence "0101", with a phase shift equal to π between the first and the second and the third and the fourth even bit pulse, respectively.

The optical signal OS of Fig. 13a is input to a two-bit-delay DPSK demodulator as shown in Fig. 13b.

**Fig. 13b** is a schematic block diagram of said two-bit-delay DPSK demodulator for use in a receiver according to an embodiment of the present invention and of an output of said demodulator in response to inputting the optical signal of Fig. 13a.

The two-bit-delay DPSK demodulator or interferometer **46** of Fig. 13b has an input **47** for inputting optical signal OS and further comprises a constructive port **48** and a destructive port **49**, each including an optical-to-electrical converter **50, 51**, respectively, e. g. a photodiode, for outputting respective electrical signals **ESC, ESD**. The two-bit-delay interferometer 46 is used at the receiver side of an optical transmission system, such as transmission 1 of Fig. 1, to compare relative phases of bits having the same polarization, i. e. odd bits and even bits, respectively. The electrical signals ESC, ESD at the output of the demodulator 46 nearly have the same kind of PMD induced distortion as the optical signal OS (cf. Fig. 13a).

At the receiver side, a logical "1" is generated on the constructive port 48 when the respective phases of two consecutive odd or even bits are identical, while at the same time a logical "0" is generated on the destructive port 49. In contrast to this, a logical "0" is generated on the constructive port 48 when the phases of two consecutive odd or even bits are shifted by a predetermined amount, e. g. by π, while at the same time a logical "1" is generated on the destructive port 49. Referring to Fig. 13b, shaded triangles signify a logical "1" while open triangles signify a logical "0".

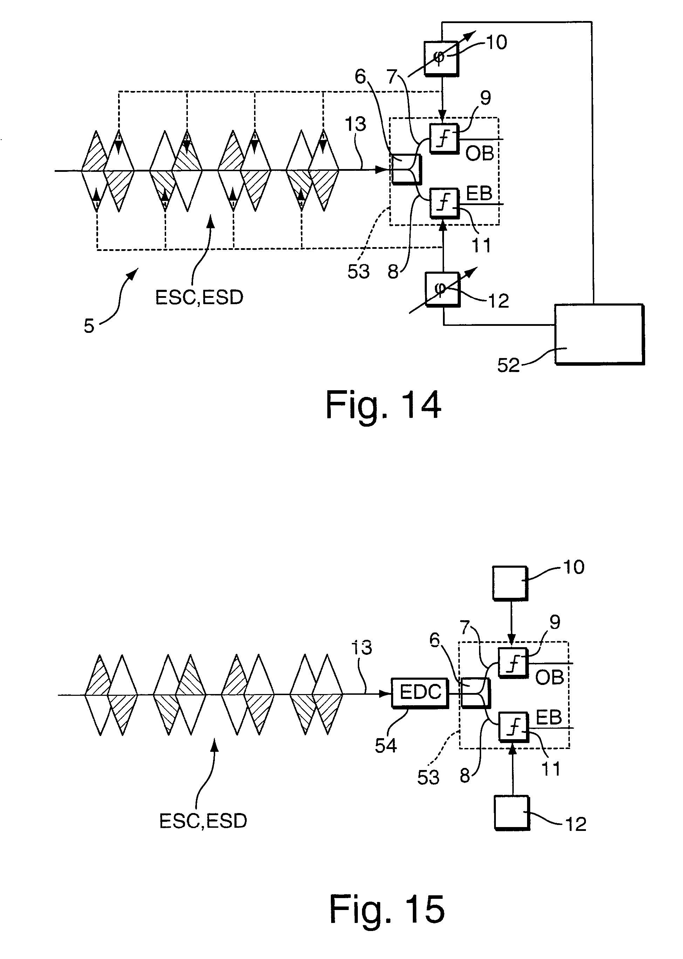

**Fig14** shows another embodiment of the receiver in accordance with the present invention, said receiver 5 receiving at its input 13 the combined electrical signals ESC, ESD of Fig. 13b. Receiver 5 according to the embodiment of Fig. 14 comprises a PMD compensating means 9 devised as a Decision Flip Flop (DFF) operating at half the bit rate of the original optical signal (Fig. 13a, b), e. g. 20 Gbit/s for an optical transmission system 1 (Fig. 1) operating at 40 Gbit/s. The other PMD compensating means 11, too, is devised as a DFF operating at, for instance, 20 Gbit/s. As before, each one of the PMD compensating means 9, 11 is individually connected to a respective adaptation means 10, 12, herein devised as respective adjustable phase shifters connected to a common clock recovery unit **52** for recovering a clock signal from the electrical (data) signal ESC, ESD.

In order to optimize the decisions by the DFFs 9, 11, the phase adjustment of odd and even bits must be performed independently by means of the respective phase shifter 10, 12. As can be gathered from previously described Fig. 2b, the phase of even bits is preferably delayed by -DGD/2 by means of phase shifter 12 with respect to the subrate clock signal generated by clock recovery unit 52 (20 GHz in the present example; cf. above), and the phase of the odd bits is delayed by +DGD/2 by means of phase shifter 10.

Preferably, there is a dynamical adjustment of the respective phases of the odd and even bits, so that every bit is decided at an optimum clock phase and tolerance to PMD is improved.

As indicated by means of a dotted box in Fig. 14, the DFFs 9, 10 together with splitting 6 effectively function as a demultiplexing stage **53**. If the demultiplexing is performed at a lower bit rate (i. e., a number of n **DFFs** working in parallel at 1/n of the original optical signal bit rate), the phases of the DFFs working on the odd bits have to be delayed by the same amount, and the phases of the DFFs working on the even bits should present the opposite delay.

**Fig. 15** is a schematic diagram of another embodiment of the receiver in accordance with the present invention. The embodiment of Fig. 15 closely resembles the above-described embodiment according to Fig. 14, the sole difference residing in the fact that in the embodiment of Fig. 15 an additional Electrical Dispersion Compensator (EDC) or Electrical Dispersion Equalizer (EDE) **54** has been connected between input 13 and splitting means 6. The EDC/EDE 54 is based on FFE or DFE or a combination of both FFE and DFE, as known to a person skilled in the art.

The other elements in Fig. 15 have been simplified with respect to Fig. 14 for mere reason of clarity.

As can be gathered from the above-described Fig. 3c, part of the distortions introduced by PMD on odd and even bits of an APOL modulated optical signal are approximately the same, wherein each pulse is broadened and the ISI is increased. A way to reduce this type of ISI, which is almost comparable to the ISI of a standard moduiation format with bits aligned along only one direction of polarization, is to use the EDC/EDE 54 in order to pre-compensate for the distortions which are identical on each bit (i. e., even bits and odd bits) prior to entering the dynamic phase adjustment demultiplexing stage described above with reference to Fig. 14.

A feedback signal required for performing the dynamic phase adjustment as described above with reference to Figs. 14, 15 by means of phase shifters 11,12 can advantageously be provided in the form of a Bit Error Rate (BER) monitored by a feedback unit (not shown) in the form of an FEC board.

In this way, distortion impairments such as PMD, PDL, or the like on APOL modulated optical signals can be mitigated considerably.

## Claims

1. A method of recovering data from an optical signal (OS) in an alternating polarisation (APOL) modulation format suffering from distortion, in particular Polarisation Mode Dispersion (PMD), the optical signal forming a bit stream of odd and even bits (OB, EB) having a given bit rate, comprising splitting the optical signal and/or an electrical signal (ESC, ESD) derived from the optical signal into at least two split signals (SS1, SS2), **characterized in that** respective distortion compensating means (9, 11) provided for the at least two split signals are controlled independently and adaptively for recovering the odd bits and the even bits, respectively.

2. The method of claim 1, **characterized in that**
- the optical signal (OS) is provided to a delay interferometer (46) having a first port (48) and a second port (49) for generating first and second electrical signals (ESC, ESD), respectively,
- the first electrical signal has first logic level ("1") and the second electrical signal has a second logic level ("0"), when respective phases of two consecutive odd or even bits (OB, EB) are identical,
- the first electrical signal has the second logic level and the second electrical signal has the first logic level, when respective phases of two consecutive odd or even bits are shifted by a predetermined amount (π), and
- the first and electrical signals are input to a demultiplexing stage (53) having at least two groups of decision units (9, 11) for odd and even bits, respectively, for data recovery, a decision phase being adjusted independently in each of the groups of decision units with respect to the other group of decision units.

3. The method of claim 1, **characterized in that** the respective decision phases for odd and even bits (OB, EB) are shifted symmetrically with respect to a reference signal.

4. The method of claim 1, **characterized in that** the decision phase for odd bits is shifted by a phase shift of DGD/2, where DGD is a Differential Group Delay induced on the optical signal (OS), and **in that** the decision phase for even bits is shifted in a direction opposite to the phase shift of the odd bit decision phase.

5. The method of claim 1, **characterized in that** Electrical Dispersion Compensation (EDC) is performed on the electrical signals (ESC, ESD) prior to inputting said electrical signals to the demultiplexing stage (53) .

6. The method of claim 1, comprising the steps of:
a) providing the first split signal (SS1) to at least a first distortion compensating means (9) adapted for processing odd bits (OB), the first distortion compensating means generating a first output signal;
b) providing the second split signal (SS2) to at least a second distortion compensating means (11) adapted for processing even bits (EB), the second distortion compensating means generating a second output signal;
c) selecting the first or the second output signal to generate a recovered data signal (RDS);
d) generating at least one feedback signal from the first or second output signals;
e) selectively providing the feedback signal to a first adaptation means (10) for controlling the first distortion compensating means or to a second adaptation means (12) for controlling the second distortion compensating means.

7. The method of claim 6, **characterized in that** selecting an output signal in step c) and selectively providing the feedback signal in step e) are controlled by a selection signal derived from a recovered clock signal associated with the signal bit rate, wherein S = C/n, S being a rate of the selection signal, C being a rate of the recovered clock signal, and n being a number of distortion compensating means (9, 11) used.

8. The method of claim 6, **characterized in that** the first and second distortion compensating means (9, 11) are optical distortion compensating means, and that first and second split signals (SS1, SS2) are converted to electrical signals downstream of the first and second distortion compensating means, respectively.

9. The method of claim 6, **characterized in that** the first and second distortion compensating means (9, 11) are electronic equalizers, and that first and second split signals (SS1, SS2) are converted to electrical signals upstream of the first and second distortion compensating means, respectively.

10. The method of claim 6, **characterized in that** a common feedback signal is generated from the recovered data signal (RDS), in particular by employing a Forward Error Correction (FEC) error count.

11. The method of claim 6, **characterized in that** a feedback is generated separately for the first and second distortion compensating means (9, 11), in particular by employing a respective eye monitor (31, 32) in connection with the first and second distortion compensating means.

12. The method of claim 1, comprising the steps of:
a) converting the optical signal (OS) to an electrical signal;
b) providing the electrical signal to at least a first Feed Forward Forward Equalizer (FFE) (36) adapted to mitigate distortion of the odd bits (OB);
c) providing the electrical signal to at least a second FFE (38) adapted to mitigate distortion of the even bits (EB);
d) providing respective output signals of the first and second FFEs to a first Decision Feedback Equalizer (DFE) (37) and to a second DFE (39), respectively;
e) providing a feedback signal generated by the first DFE to the second DFE and providing a feedback signal generated by the second DFE to the first DFE.

13. The method of claim 12, further comprising clocking the DFEs (37, 39) with a clock signal (CS) having a frequency corresponding to half the bit rate of the optical signal (OS).

14. The method of claim 12, further comprising clocking the first and second DFEs (37, 39) with respective clock signals having a phase shift with each other.

15. The method of claim 12, further comprising using the first and/or the second FFE (36, 38) as phase shifter.

16. The method of claim 12, further comprising using a respective time delay other than one bit period of the electrical signals for delaying the feedback signals.

17. The method of claim 6, further comprising delaying the first and/or the second output signal.

18. A receiver (5) for use in an optical transmission system (1) with an alternating polarisation (APOL) modulated data bit stream of odd and even bits (OB, EB) having a given bit rate, comprising means (6) for splitting a transmission path for the optical signal (OS) and/or an electrical signal (ESC, ESD) derived from the optical signal into at least two transmission path branches (7, 8) parallel to each other,
**characterized in that** the first transmission path branch (7) comprises at least one distortion compensating means (9) and the second transmission path branch (8) comprises at least one second distortion compensating means (11) in operative connection with at least one respective adaptation means (10, 12) for independently and adaptively controlling the at least one first and second distortion compensating means for recovering the odd bits (OB) and the even bits (EB), respectively.

19. The receiver (5) of claim 18, further comprising:
- a delay interferometer (46) having a first port (48) and a second port (49) for generating first and second electrical signals (ESC, ESD), respectively, the delay interferometer being adapted to generate the first electrical signal having first logic level ("1") and the second electrical signal having a second logic level ("0"), when respective phases of two consecutive odd or even bits (OB, EB) are identical, and the delay interferometer being adapted to generate the first electrical signal having the second logic level and the second electrical signal having the first logic ievei, when respective phases of two consecutive odd or even bits are shifted by a predetermined amount (π);
- a demultiplexing stage (53) arranged for receiving the first and second electrical signals, the demultiplexing stage having at least two groups of decision units (9, 11) for data recovery of odd and even bits (OB, EB), respectively, the demultiplexing stage further having means for independently and adaptively adjusting a decision phase in each of the groups of decision units with respect to the other group of decision units.

20. The receiver (5) of claim 19, **characterized in that** the decision units (9, 11) are formed of Decision Flip Flops (DFFs) operating at a bit rate equal to the signal bit rate divided by a number (n) of decision units used.

21. The receiver (5) of claim 19, **characterized in that** the decision units are connected with a clock recovery unit (52) providing a clock signal, wherein a phase shifter (10, 12) is arranged between each decision unit and the clock recovery unit for independently adjusting a respective decision phase.

22. The receiver (5) of claim 19, **characterized in that** an electrical equalizer (54) is located in the transmission path upstream of the splitting means (6).

23. The receiver (5) of claim 22, **characterized in that** the electrical equalizer (54) is one of a FFE, a DFE, and a combination of a FFE and a DFE.

24. The receiver (5) of claim 22, **characterized in that** the electrical equalizer (54) is adapted to compensate distortions of the optical signal (OS) which are identical on odd and even bits (OB, EB).

25. The receiver (5) of claim 18, **characterized in that** the first and/or the second distortion compensating means (9, 11) comprise optical distortion compensators (19, 20, 23, 24).

26. The receiver (5) of claim 18, **characterized in that** the first and/or the second PMS compensating means (9, 11) comprise electrical distortion compensators (28, 30), in particular linear electronic distortion equalizers, e. g. FFEs.

27. The receiver (5) of claim 18, **characterized in that** the first and second distortion compensating means (9, 11) are connected to a common feedback unit (18) for generating at least one feedback signal from the first and second output signals, a first selecting means (14) being provided between the feedback unit and the adaptation means (10, 12) for selectively providing the feedback signal to the adaptation means (10) of the first distortion compensating means (9) or to the adaptation means (12) of the second distortion compensating means (11).

28. The receiver (5) of claim 18, further comprising a second selecting means (15) for selecting the odd or the even bits (OB, EB) at a respective output of the first and second distortion compensating means (9, 11) for generating a recovered data signal (RDS).

29. The receiver (5) of claim 18, **characterized in that** each distortion compensating means (9, 11) is connected with a respective individual feedback unit (30, 31) for generating at least one feedback signal providing a respective feedback signal to the respective adaptation means (10, 12).

30. The receiver (5) of claim 18, **characterized in that** distortion compensating means (9, 11) comprise an FFE (36, 38) and a DFE (37, 39) connected in series.

31. The receiver (5) of claim 30, **characterized in that** an output (37a) of the DFE (37) in the first distortion compensating means (9) is connected with an input (39b) of the DFE (39) in the second distortion compensating means (11) via a first cross-connection, and an output (39a) of the DFE (39) in the second distortion compensating means (11) is connected with an input (37b) of the DFE (37) in the first distortion compensating means (9) via a second cross-connection.

32. The receiver (5) of claim 31, **characterized in that** the first and second cross-connections comprise a first and a second delay element (37c, 39c), respectively.

33. The receiver (5) of claim 30, **characterized in that** the first and second distortion compensating means (9, 11) are connected to a common clock for clocking the respective DFEs (37, 39), wherein a third delay element (42) is arranged between the clock and one of the first and second distortion compensating means.

34. The receiver (5) of claim 27, **characterized in that** a fourth delay element (45) is located between the first selecting means (14) and one of the first and second distortion compensating means (9, 11).

35. A transmission system (1) for transmitting optical signals (OS) having an alternating polarisation (APOL) modulation format, comprising:
- an optical transmission line (4) for transmitting the optical signals, the optical transmission line introducing distortion distortion effects on the optical signals;
- at least one receiver (5) connected to the optical transmission line (4), the receiver comprising means (6) for splitting a transmission path for the optical signal (OS) and/or an electrical signal (ESC, ESD) derived from the optical signal into at least two transmission path branches (7, 8) parallel to each other,
**characterized in that** the first transmission path branch (7) comprises at least one distortion compensating means (9) and the second transmission path branch (8) comprises at least one second distortion compensating means (11) in operative connection with at least one respective adaptation means (10, 12) for independently and adaptively controlling the at least one first and second distortion compensating means for recovering the odd bits (OB) and the even bits (EB), respectively.
